# EUROPEAN PATENT SPECIFICATION

(11) **EP 3 537 613 B1**
(45) Date of publication and mention of the grant of the patent: **18.02.2026**
(21) Application number: 18465506.6
(22) Date of filing: 07.03.2018
(51) Int. Cl.: H04B 1/3877, H04M 1/00

(54) **COMPENSATOR ARRANGEMENT**
KOMPENSATORANORDNUNG
AGENCEMENT DE COMPENSATEUR

(43) Date of publication of application: 11.09.2019
(73) Proprietor: AUMOVIO Germany GmbH, 60488 Frankfurt am Main (DE)
(72) Inventor: Craciun, Serban, 300687 Timisoara (RO); Ionescu, Ioana Sabina, 331042 Hunedoara (RO)
(74) Representative: Aumovio Corporation

(56) References cited:
- EP-A1- 0 558 210
- EP-A1- 3 477 868
- WO-A1-2017/222269
- US-A1- 2003 100 351
- US-A1- 2009 131 131

## Description

The present invention relates to mobile communication. More specifically, the present invention relates to a compensator arrangement for a vehicle, for example a GSM (Global System for Mobile Communications) compensator arrangement, comprising a smart phone terminal, a compensator, a smart phone terminal and a vehicle.

EP 0 558 210 Al, US 2003/100351 Al and US 2009/1 31 1 31 Al each disclose a Compensator arrangement. WO2017/222269A1 also discloses relevant prior art.

A compensator arrangement or, more specifically, a mobile communication system compensator arrangement, such as a GSM compensator arrangement, generally represents the electrical infrastructure to connect a mobile phone to an external antenna of a vehicle. When communicating inside a vehicle using a mobile device, the chassis of the vehicle shields the electromagnetic waves, so that the link quality deteriorates. As a further effect, the mobile device increases its output power with possibly negative effects on the health of the user and on the lifetime of the battery of the mobile device. For these reasons, external antennas are used that are mounted, e.g. on the rooftop of a vehicle. The unimpeded received RF (radio frequency) signal is conducted by wire from the external antenna into the car, undergoing first some amplification or equalization in a compensator before it is further conducted by wire to a smart phone terminal in the cockpit that holds the mobile device. The terminal couples the received RF signal on the wire to the mobile using e.g. a passive antenna coupling method. The RF output signal of the mobile is conducted along the same way in opposite direction. The compensator may only need to be active when a mobile is residing in the terminal. Thus, usually the compensator provides a sleep mode where only a very few circuits are powered on. In the sleep mode the compensator listens whether a wake-up signal arrives. If a wake up signal occurs, the circuits that have been powered down are activated and the compensator is fully operable. The smart phone terminal generates the wake-up signal when detecting the presence of a mobile device in its cradle. The harness between the smart phone terminal and the GSM compensator consists of an RF cable, usually a coax cable, and a second cable for wake-up signal.

It should be noted, that the mobile communication system may be a GSM mobile communication system, or a UMTS, LTE, 3G, 4G or 5G mobile communication system.

There is a desire to reduce the costs and the effort arising by having two cables that have to be installed side by side and to simplify the harness. This is respectively achieved by the teaching of the independent claims, wherein the control signal is a wake-up signal and the compensator is activated upon receiving the wake-up signal.

The accompanying figures illustrate embodiments of the invention.
- Fig. 1: shows a compensator arrangement,
- Fig. 2: shows a compensator arrangement according to an embodiment,
- Fig. 3: shows a vehicle according to an embodiment.

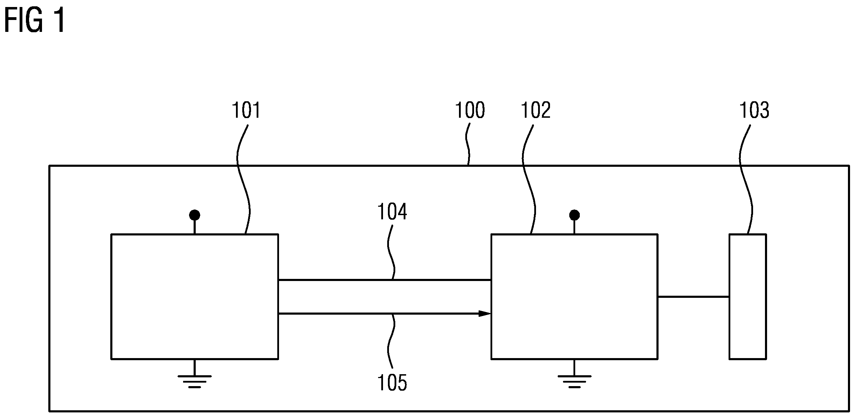

Fig. 1 shows a compensator arrangement (100), such as a GSM compensator arrangement,) in a vehicle comprising a smart phone terminal (101), a (e.g. GSM) compensator (102) and an external antenna (103). The smart phone terminal (101) receives and transmits high frequency signals to and from, respectively, the compensator 102, which is connected to the external antenna 103. The RF connection between the smart phone terminal (101) and the compensator (102) is realized with a cable (104). The smart phone terminal (101) generates a control signal, e.g., a wake-up signal that is transmitted over a separate cable (105) to the compensator (102).

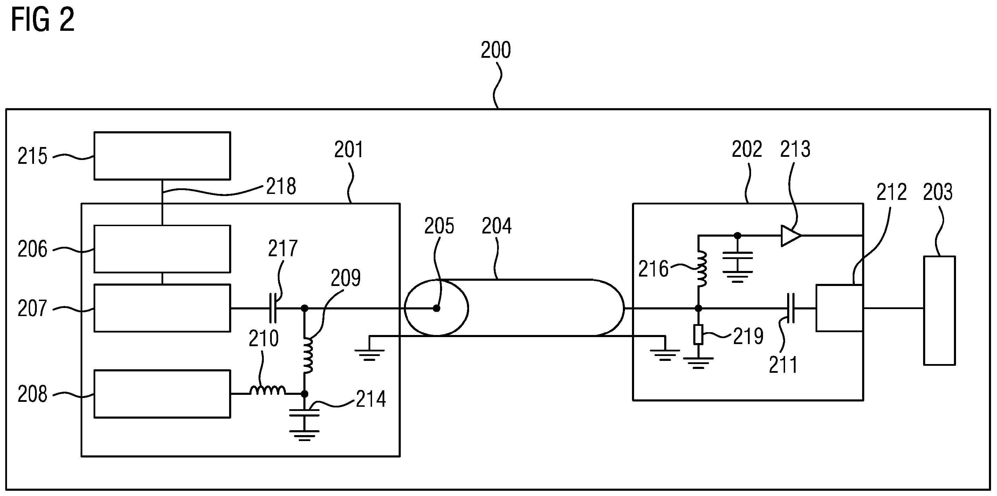

Referring to Fig. 2, a compensator arrangement (200) for a vehicle is shown, comprising a smart phone terminal (201) configured to connect to a mobile phone (215), a compensator (202) configured to improve a link quality and coverage for the mobile phone (215), and a cable (204) having a first wire (205) that carries a high frequency signal. The smart phone terminal (201) is configured to generate a control signal and to transmit the control signal on the first wire (205) to the compensator (202). The smart phone terminal (201) connects the mobile phone (215) to the cable (204) which may be a coaxial cable. The compensator (202) may be an amplifier or an equalizer.

A DC switch (208) generates the control signal. The control signal passes the inductors (210, 209) and is fed into the wire 205 of the cable 204. The capacity 217 blocks the control signal so as not to interfere the RF signal in the matching circuit (207) and the antenna circuit (206). The compensator (202) receives the control signal that is blocked by capacity (211) so as not to pass into the RF part (212) of the compensator (202) but to pass the inductor (216) and the driver (213). The control signal may be a wake-up signal and the compensator (202) is activated for nominal operation upon receiving the wake-up signal. Further components as e.g. the capacitor (214) and the resistor (219) may be present to match electrical specifications as voltage levels or impedances etc.

The smart phone terminal (201) receives the RF signal from the mobile phone (215) using a plugged or an over-the-air connection (218), and feeds the signal over the smart phone terminal antenna circuit (206), the matching circuit (207) and the DC blocking capacitor (217) into the cable (204). The compensator (202) receives the RF signal, passes it to the RF part (212) of the compensator (202), which amplifies and/or equalizes the signal and prepares it for transmission by the external antenna (203).

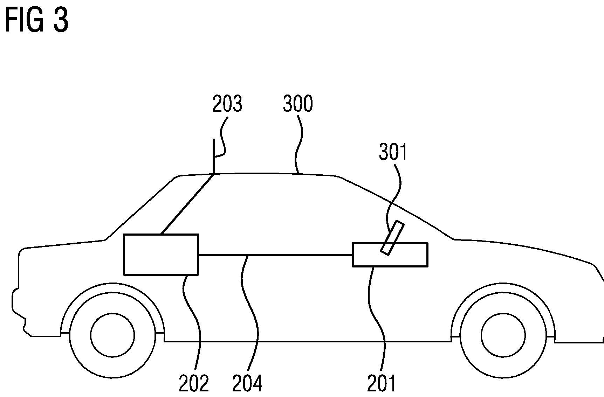

Fig. 3 shows a vehicle (300) comprising a compensator arrangement (200) consisting of a compensator (202), a cable (204) and a smart phone terminal (201) according to embodiments of the invention. The compensator is connected to the external antenna (203) and the smart phone terminal (201) holds and is connected to the mobile phone (301).

## Claims

1. Compensator arrangement (200) for a vehicle, comprising
a smart phone terminal (201) configured to connect to a mobile phone (215);
a compensator (202) configured to improve a link quality and coverage for the mobile phone (215); and
a cable (204) having a first wire (205) that carries a high frequency signal;
wherein the smart phone terminal (201) is configured to generate a control signal and to transmit the control signal on the first wire (205) to the compensator (202),
**characterized in that**
the control signal is a wake-up signal and the compensator (202) is activated upon receiving the DC wake-up signal.

2. Compensator arrangement (200) according to claim 1, wherein the smart phone terminal (201) is a device for connecting a mobile phone (215) to the cable (204); and
wherein the compensator (202) is a device for connecting the cable (204) to an external antenna (203).

3. Compensator arrangement (200) according to one of the previous claims, wherein the cable (204) is a coaxial cable.

4. Compensator arrangement (200) according to one of the previous claims, wherein the compensator (202) is an amplifier or an equalizer.

5. Compensator arrangement (200) according to one of the previous claims, wherein the control signal is coupled to the cable (204) using an impedance (209, 210).

## Patentansprüche

1. Kompensatoranordnung (200) für ein Fahrzeug, umfassend ein Smartphone-Endgerät (201), das zum Verbinden mit einem Mobiltelefon (215) ausgelegt ist;
einen Kompensator (202), der zum Verbessern einer Verbindungsqualität und Abdeckung für das Mobiltelefon (215) ausgelegt ist; und
ein Kabel (204) mit einem ersten Draht (205), die ein Hochfrequenzsignal trägt;
wobei das Smartphone-Endgerät (201)zum Erzeugen eines Steuersignals und zum Übertragen des Steuersignals auf dem ersten Draht (205) zu dem Kompensator (202) ausgelegt ist,
**dadurch gekennzeichnet, dass**
das Steuersignal ein Aufwecksignal ist und der Kompensator (202) beim Empfangen des Gleichstrom-Aufwecksignals aktiviert wird.

2. Kompensatoranordnung (200) nach Anspruch 1, wobei das Smartphone-Endgerät (201) eine Vorrichtung zum Verbinden eines Mobiltelefons (215) mit dem Kabel (204) ist; und
wobei der Kompensator (202) eine Vorrichtung zum Verbinden des Kabels (204) mit einer externen Antenne (203) ist.

3. Kompensatoranordnung (200) nach einem der vorhergehenden Ansprüche, wobei das Kabel (204) ein Koaxialkabel ist.

4. Kompensatoranordnung (200) nach einem der vorhergehenden Ansprüche, wobei der Kompensator (202) ein Verstärker oder ein Entzerrer ist.

5. Kompensatoranordnung (200) nach einem der vorhergehenden Ansprüche, wobei das Steuersignal unter Verwendung einer Impedanz (209, 210) mit dem Kabel (204) gekoppelt ist.

## Revendications

1. Agencement de compensateur (200) pour véhicule, comprenant un terminal de téléphone intelligent (201) configuré pour se connecter à un téléphone mobile (215) ;
un compensateur (202) configuré pour améliorer une qualité et une couverture d'une liaison pour le téléphone mobile (215) ; et
un câble (204) ayant un premier fil (205) qui transporte un signal haute fréquence ; dans lequel le terminal de téléphone intelligent (201) est configuré pour générer un signal de commande et transmettre le signal de commande sur le premier fil (205) au compensateur (202),
**caractérisé en ce que**
le signal de commande est un signal de réveil et le compensateur (202) est activé dès la réception du signal de réveil à CC.

2. Agencement de compensateur (200) selon la revendication 1, dans lequel le terminal de téléphone intelligent (201) est un dispositif pour la connexion d'un téléphone mobile (215) au câble (204) ; et
dans lequel le compensateur (202) est un dispositif pour la connexion du câble (204) à une antenne externe (203).

3. Agencement de compensateur (200) selon l'une des revendications précédentes, dans lequel le câble (204) est un câble coaxial.

4. Agencement de compensateur (200) selon l'une des revendications précédentes, dans lequel le compensateur (202) est un amplificateur ou un égaliseur.

5. Agencement de compensateur (200) selon l'une des revendications précédentes, dans lequel le signal de commande est couplé au câble (204) à l'aide d'une impédance (209, 210).
